# FASCICULE DE BREVET EUROPEEN

(11) **EP 1 120 298 B1**
(45) Date de publication et mention de la délivrance du brevet: **31.03.2004**
(21) Numéro de dépôt: 01400164.8
(22) Date de dépôt: 19.01.2001
(51) Int. Cl.: B60G 3/10, B60G 7/00, B60G 11/10, B60G 21/05

(54) **Train avant pour véhicule automobile à lame de ressort transversale**
Vorderradaufhängung mit transversaler Blattfeder
Front wheel suspension with transversal leaf spring

(30) Priorité: 28.01.2000 FR 0001123
(43) Date de publication de la demande: 01.08.2001
(73) Titulaire: Peugeot Citroen Automobiles SA, 92200 Neuilly sur Seine (FR)
(72) Inventeur: Galtier, Lucien, 91390 Morsang sur Orge (FR)
(74) Mandataire: Thinat, Michel

(56) Documents cités:
- EP-A- 0 436 407
- EP-B- 0 685 354

## Description

La présente invention concerne un train avant pour véhicule automobile notamment du type pseudo-Mac Pherson.

Jusqu'à présent, les véhicules automobiles sont équipés de trains avant du type Mac Pherson, ou pseudo-Mac Pherson, à double triangle ou à multibras.

Tous ces trains avant ont généralement les bras ou triangles inférieurs qui s'articulent sur le berceau ou sur la caisse du véhicule par l'intermédiaire d'articulations élastiques permettant un bon filtrage longitudinal horizontal des chocs que reçoit chaque roue avant du véhicule en fonctionnement dynamique.

Lorsque, pour des raisons économiques, de gain de poids et de réduction du nombre de pièces constituant le train avant, chaque ressort de suspension, les bras inférieurs ou les triangles inférieurs, la barre anti-dévers, le berceau, sont remplacés dans leur fonction par une lame de ressort de suspension en matériau composite s'étendant dans le sens transversal au véhicule, le filtrage longitudinal des chocs n'est pas toujours pris en compte ou l'est de manière superficielle et, en tout cas, ne peut être effectué convenablement à cause de la raideur très élevée de la lame de suspension dans le plan horizontal. EP 0 685 354 décrit un train avant pour véhicule selon le préambule de la revendication 1.

La présente invention a pour but d'éliminer l'inconvénient ci-dessus en proposant un train avant pour véhicule automobile, comprenant une lame de ressort s'étendant dans le sens transversal au véhicule et dont chaque extrémité est reliée, par l'intermédiaire d'une articulation à rotule, à un pivot de support de roue avant, la lame transversale étant fixée à la caisse du véhicule d'une part en avant de la lame par deux points de fixation et d'autre part en arrière de celle-ci par deux autres points de fixation, et qui est caractérisé en ce que les deux points de fixation avant de la lame transversale sont constitués par des liaisons élastiques ayant une raideur très élevée dans le sens transversal au véhicule et une certaine souplesse dans le sens longitudinal au véhicule autorisant un déplacement longitudinal de la partie avant de la lame transversale.

De préférence, chaque liaison élastique avant de la lame transversale est située approximativement à la moitié de la distance transversale séparant le centre de la rotule du pivot de support de roue du plan vertical contenant l'axe longitudinal du véhicule.

La lame transversale comprend, en arrière de celle-ci, deux pattes de fixation s'étendant longitudinalement au véhicule au droit des deux points de fixation avant et dont les extrémités sont fixées rigidement à la caisse du véhicule pour constituer les deux points de fixation arrière, chaque patte de fixation comprenant une partie élastiquement déformable permettant à la partie avant de la lame transversale de se déplacer longitudinalement dans un plan horizontal.

La partie élastiquement déformable de chaque patte de fixation est constituée par un pli ondulé transversal permettant le déplacement longitudinal de la patte de fixation.

Selon une variante de réalisation, la lame transversale comprend, en arrière de celle-ci, deux pattes de fixation rigides s'étendant longitudinalement au véhicule au droit des deux points de fixation avant et dont les extrémités sont fixées à la caisse du véhicule par deux liaisons élastiques formant les deux points de fixation arrière, ayant des caractéristiques de raideur transversale et de souplesse longitudinale sensiblement identiques à celles des liaisons élastiques avant de la lame transversale.

La traverse de direction du véhicule, contenant la crémaillère de direction, comprend deux parties formant bras de fixation à la caisse du véhicule, s'étendant en avant de l'axe de la crémaillère de direction et dont les deux extrémités de fixation à la caisse forment des entretoises de fixation entre la caisse et respectivement les deux liaisons élastiques avant de la lame transversale, chaque liaison élastique avant et son entretoise associée étant fixée ensemble à la caisse par un boulon de fixation les traversant.

Chaque liaison élastique avant comprend un bloc en une matière à base de caoutchouc fixé entre l'extrémité correspondante formant entretoise d'une partie formant bras par l'intermédiaire d'une rondelle supérieure et une paroi plane supérieure d'un bossage intérieurement creux sur la lame transversale par l'intermédiaire d'une coupelle logée dans une ouverture de forme conjuguée réalisée à travers la paroi plane supérieure, le bloc en caoutchouc étant enserré entre la rondelle supérieure et la coupelle par une rondelle inférieure en appui sous la face inférieure de la paroi plane sous l'action de la force de serrage du boulon de fixation.

Le bloc en caoutchouc est adhérisé à la rondelle supérieure et à la coupelle et une couronne en une matière à base de caoutchouc est interposée entre la rondelle inférieure et la face inférieure de la paroi plane du bossage.

Une entretoise est disposée entre les deux rondelles supérieure et inférieure concentriquement au boulon de fixation.

Chaque rotule du pivot de support de roue est fixée sur l'extrémité correspondante de la lame transversale par l'intermédiaire d'une plaque de support solidaire de cette extrémité.

Chaque amortisseur ou jambe de force, dont la tige d'amortisseur est reliée à la caisse du véhicule par une articulation élastique, a la partie inférieure de son cylindre reliée à la plaque de support précitée par l'intermédiaire d'une extension en forme de tige rigide, dont l'extrémité inférieure est reliée à la plaque de support par une articulation élastique, dont l'axe est perpendiculaire à l'extrémité correspondante de la lame transversale.

La lame transversale est en matériau composite et s'étend sensiblement au droit et en dessous de l'axe des roues avant en étant contenue sensiblement dans un plan horizontal correspondant à la partie inférieure de soubassement du véhicule.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant plusieurs mode de réalisation de l'invention et dans lesquels :
- la figure 1 est une vue en perspective d'un train avant de véhicule automobile conforme à l'invention ;
- la figure 2 est une vue en coupe suivant la ligne II-II de la figure 1 ;
- la figure 3 est une vue partielle en coupe suivant la ligne III-III de la figure 2 ;
- la figure 4 est une vue de dessus suivant la flèche IV de la figure 3 de la traverse de direction ;
- la figure 5 est une vue en coupe agrandie suivant la ligne V-V de la figure 3 ;
- la figure 6 est une vue en coupe suivant la ligne VI-VI de la figure 5 ;
- la figure 7 est une vue agrandie de la partie cerclée en VII de la figure 1 ;
- la figure 8 est une vue en perspective agrandie, avec coupe partielle, de la liaison entre l'extrémité de la lame de ressort de suspension et le pivot de support de roue avant correspondant ;
- la figure 9 est une vue partielle en coupe suivant la flèche IX de la figure 8 ;
- la figure 10 est une vue en perspective semblable à celle de la figure 1 et représentant une variante de réalisation de l'invention ;
- la figure 11 est une vue en coupe suivant la ligne XI-XI de la figure 10 ;
- la figure 12 est une vue en perspective semblable à celle de la figure 1 et représentant l'application de l'invention à un train avant à deux triangles supérieurs situés haut ;
- la figure 13 est une vue agrandie avec coupe partielle de la partie cerclée en XIII de la figure 12 ;
- la figure 14 est une vue en coupe suivant la ligne XIV-XIV de la figure 13 ; et
- la figure 15 est une vue en perspective semblable à celle de la figure 1 avec l'application de l'invention à un train avant à deux triangles supérieurs situés bas.

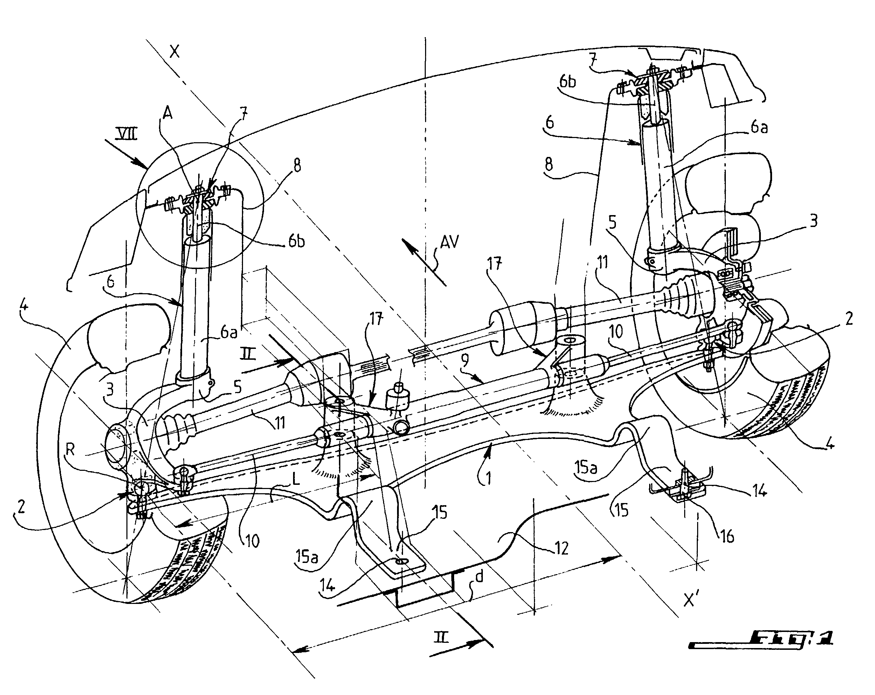

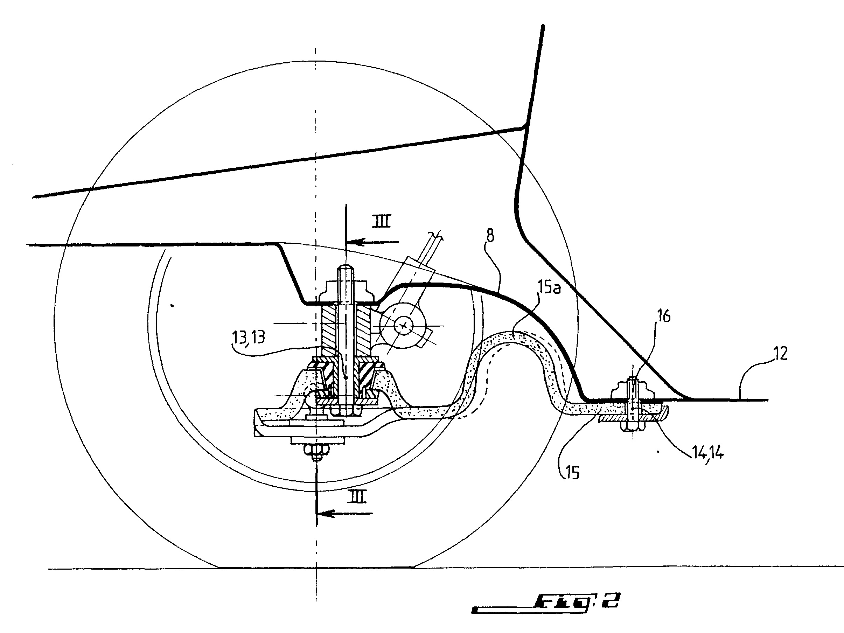

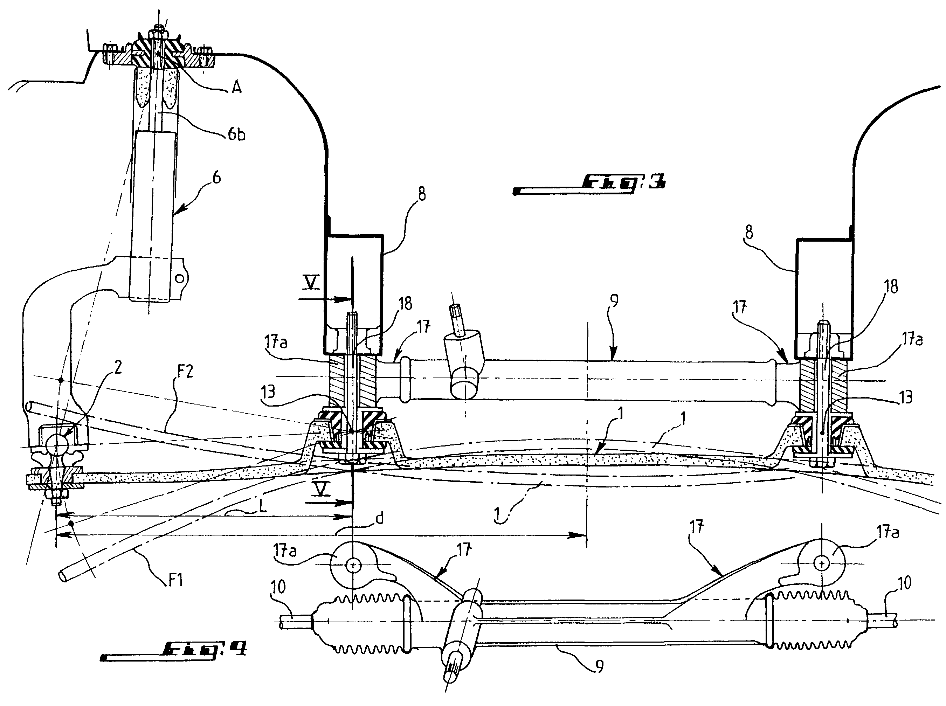

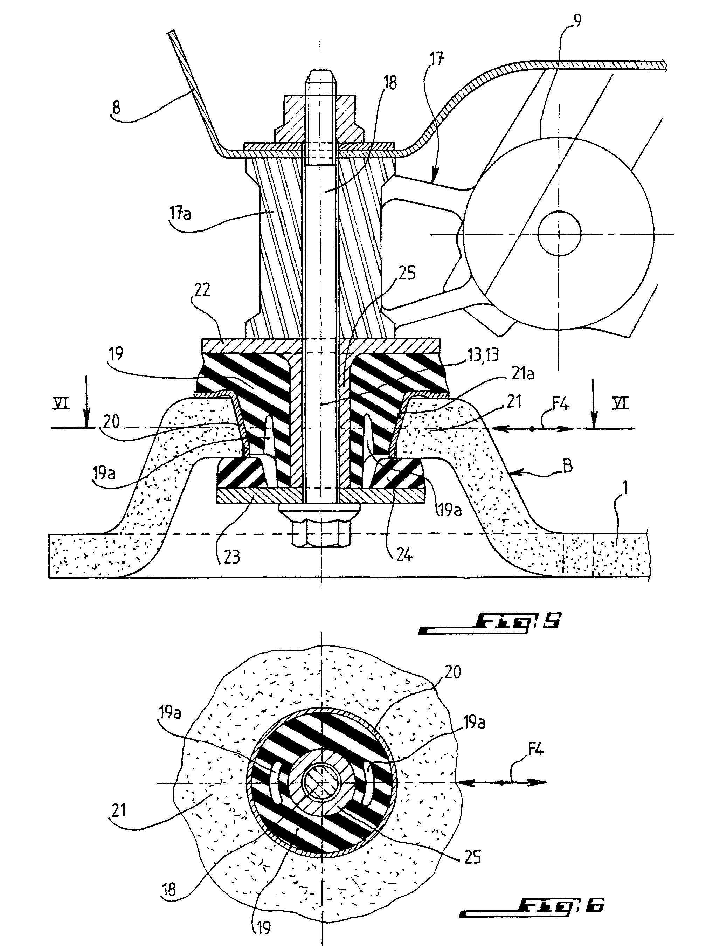

En se reportant aux figures 1 à 9, le train avant pour véhicule automobile du type pseudo-Mac Pherson comprend une lame de ressort 1 en matériau composite s'étendant dans le sens transversal au véhicule, dont l'avant est symbolisé par la flèche AV en figure 1, et dont chaque extrémité est reliée, par l'intermédiaire d'une articulation à rotule 2, à un pivot 3 de support de roue avant 4, qui est fixé, à son extrémité opposée et par l'intermédiaire d'un collier 5, à l'extrémité inférieure du cylindre 6a d'un amortisseur ou jambe de force télescopique 6, dont la tige intérieure coulissante 6b est accouplée, par une articulation élastique 7, à la structure 8, telle que la caisse, du véhicule. Le pivot 3 de support de roue effectue un mouvement de pivotement à des fins de direction et un mouvement vertical par rapport à la caisse 8 du véhicule.

Le mouvement de pivotement des deux pivots 3 de support de roues est assuré par la traverse de direction 9 contenant la crémaillère de direction (non représentée), qui déplace les deux biellettes de direction 10 de commande du pivotement des pivots 3.

Les références 11 concernent les arbres des roues avant 4 du véhicule.

La lame transversale 1 remplace fonctionnellement les éléments du train avant du type pseudo-Mac Pherson et qui comprennent les deux ressorts de suspension, et, en partie inférieure, le berceau, les bras ou les deux triangles inférieurs, la barre anti-dévers avec ses deux biellettes, ainsi qu'en partie supérieure les ressorts métalliques à boudin, ce qui permet de simplifier la liaison élastique 7 de chaque tige 6b de l'amortisseur 6 guidant le pivotement de la roue avant correspondante 4 autour de l'axe de pivotement passant par le centre R de la rotule 2 et le centre A de l'articulation 7, comme représenté en particulier en figure 1, liaison élastique 7 qui sera décrite ultérieurement.

La traverse 1 s'étend ainsi transversalement de part et d'autre de l'axe longitudinal X-X' de la caisse 8 du véhicule, sensiblement au droit et en dessous de l'axe des roues avant en étant contenue sensiblement dans un plan horizontal correspondant à la partie inférieure du soubassement 12 du véhicule.

La lame 1 est fixée à la caisse 8 du véhicule d'une part en partie avant de celle-ci par deux points de fixation avant 13 et d'autre part, en partie arrière de la lame 1, par deux points de fixation arrière 14.

Selon l'invention, les deux points de fixation avant 13 de la lame 1 à la caisse 8 du véhicule sont constitués chacun par une liaison élastique ayant une raideur très élevée dans le sens transversal au véhicule et une certaine souplesse dans le sens longitudinal à celui-ci et, de préférence, chaque liaison élastique avant 13 est située approximativement à la moitié de la distance transversale d séparant le centre R de la rotule correspondante 2 du pivot 3 de support de roue du plan vertical contenant l'axe longitudinal X-X' du véhicule. De la sorte, on détermine une distance transversale L entre le centre R de la rotule 2 et la liaison élastique avant 13 et qui correspond à la longueur d'un bras ou d'un triangle inférieur de suspension.

Ainsi, comme cela ressort plus clairement de la figure 3, la partie avant de la lame transversale 1 est élastiquement déformable dans un plan transversal vertical de façon à travailler en flexion dans ce plan suivant la charge verticale de la caisse 8 du véhicule agissant sur les deux points d'appui élastiques des liaisons avant 13 de la lame 1 avec la caisse 8. La figure 3 montre l'évolution de la forme de déformation de la lame 1 suivant les charges verticales de la caisse. Ainsi, en l'absence de charge, qui correspond à la position de détente du véhicule, la lame 1 occupe une position de repos de forme généralement arquée convexe dirigée vers le haut comme indiqué en F1, tandis que sous une charge verticale maximum de la caisse 8, la lame est déformée suivant une forme arquée convexe dirigée vers le bas comme indiqué en F2. Lors d'une application d'une charge moyenne sur la caisse 8 du véhicule, la lame 1 aussi bien au niveau de sa partie centrale qu'au niveau de ses deux parties d'extrémités formant bras de suspension, occupe une forme approximativement rectiligne horizontale.

Dans ces conditions, la lame de ressort 1 joue le rôle d'une barre anti-dévers et permet ainsi de la supprimer.

En outre, le fait que chaque liaison élastique avant 13 ait une certaine souplesse dans le sens longitudinal au véhicule autorise à la partie avant de la lame 1, qui maintient en partie inférieure le pivot 3 de support de roue, de petits déplacements dans ce sens longitudinal, filtrant ainsi par rapport à la caisse 8 du véhicule les chocs longitudinaux, suivant l'axe du véhicule, que reçoit la roue avant correspondante en fonctionnement dynamique.

La lame transversale 1 comprend, en arrière de celle-ci, deux pattes de fixation 15 s'étendant parallèlement à l'axe longitudinal X-X' du véhicule au droit des deux points de fixation avant 13 et dont les extrémités sont fixées rigidement au soubassement 12 de la caisse 8 du véhicule, par l'intermédiaire de vis de fixation 16, pour constituer les deux points de fixation arrière 14 de la lame 1 à la caisse 8.

Chaque patte de fixation 15 comprend une partie élastiquement déformable 15a permettant à la partie avant de la lame 1 de se déplacer dans le sens longitudinal au véhicule dans un plan horizontal.

De préférence, la partie élastiquement déformable 15a de chaque patte de fixation 15 est constituée par un pli ondulé transversal permettant le déplacement longitudinal, dans un plan horizontal, de la patte de fixation 15. Cette possibilité supplémentaire de déplacement longitudinal de la partie avant de la lame 1 permet un meilleur filtrage des chocs longitudinaux appliqués à chaque roue avant.

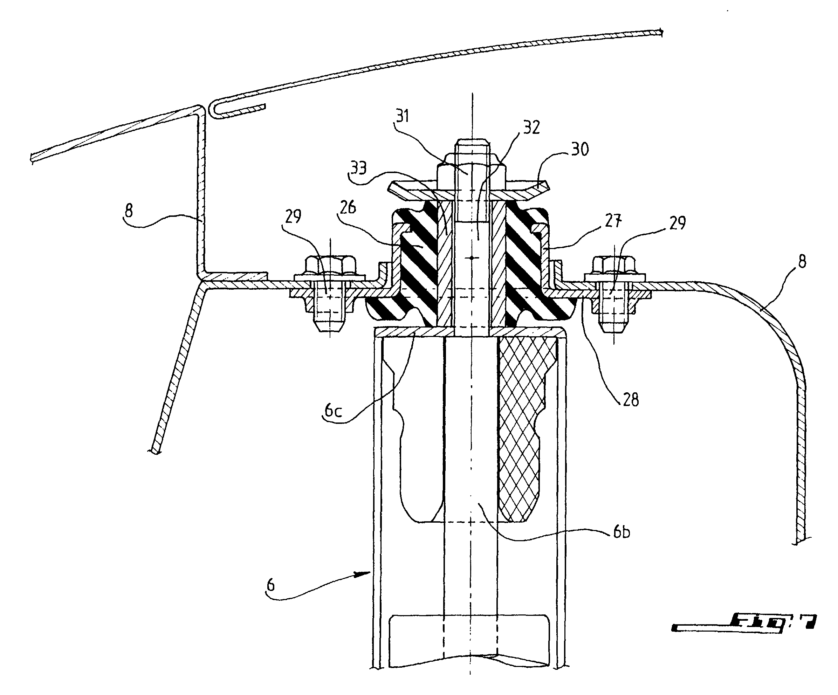

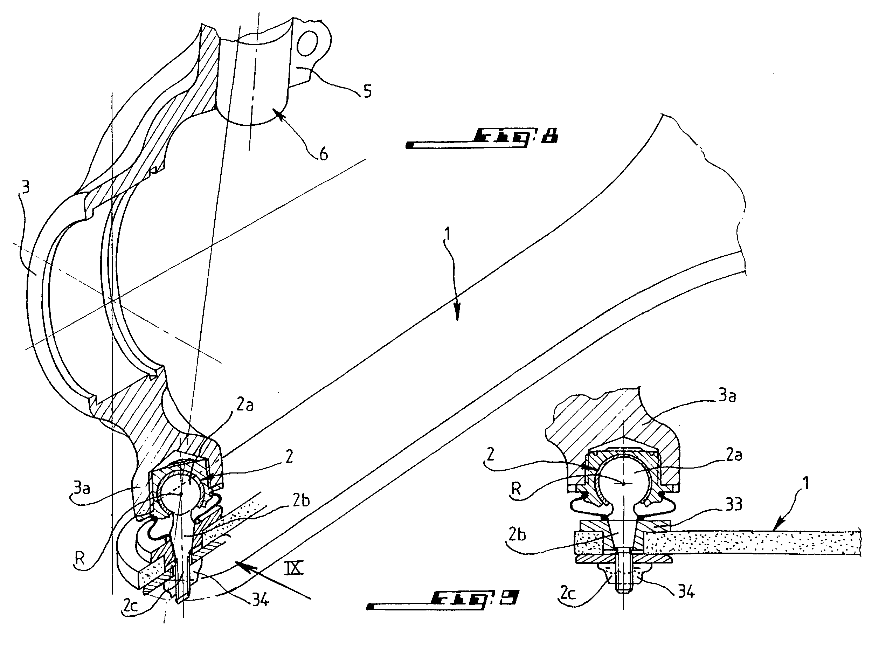

La traverse de direction 9 comprend deux parties 17 formant bras de fixation de la traverse 9 à la caisse 8 du véhicule. Les deux bras de fixation 17 s'étendent en avant de l'axe de la crémaillère de direction et obliquement en sens inverse l'un de l'autre. Chaque bras 17 a son extrémité libre 17a constituant une entretoise fixée, en s'étendant sensiblement perpendiculairement au plan de la lame 1, entre la caisse 8 du véhicule et une liaison élastique avant correspondante 13 de la lame 1, par l'intermédiaire d'un boulon de fixation 18. Plus précisément, comme cela ressort mieux des figures 5 et 6, chaque liaison élastique 13 comprend un bloc 19 en une matière à base de caoutchouc fixé, à sa base, dans une coupelle métallique 20, dont la partie tronconique est logée dans une ouverture de forme conjuguée 21a réalisée à travers une paroi plane supérieure 21, perpendiculaire à l'axe du boulon 18, d'un bossage intérieurement creux B de la lame 1 faisant saillie en partie supérieure de celle-ci. Le bloc de caoutchouc 19 est enserré entre une rondelle supérieure 22, interposée entre l'extrémité inférieure de l'entretoise 17a du bras 17 et la partie supérieure du bloc en caoutchouc 19, et une rondelle inférieure 23, sous l'action de la force de serrage du boulon de fixation 18 qui traverse la rondelle inférieure 23, le bloc en caoutchouc 19, la rondelle supérieure 22, l'entretoise 17a du bras 17 et une paroi horizontale de la caisse 8 à laquelle il est fixé. Une couronne 24 en une matière à base de caoutchouc est interposée entre la rondelle inférieure 23 et la face inférieure de la paroi plane 21 du bossage B et une entretoise 25 est disposée entre les deux rondelles supérieure 22 et inférieure 23 concentriquement au boulon de fixation 18. L'entretoise 25, qui peut être réalisée en une seule pièce avec la rondelle supérieure 22, a une longueur telle que lors du serrage du boulon 18, le bloc en caoutchouc 19 et la couronne en caoutchouc 24 ne soient pas complètement écrasés axialement. Chaque bloc en caoutchouc 19 comporte deux cavités internes 19a en forme de trou oblong, diamétralement opposées dans le sens longitudinal au véhicule, chaque trou oblong 19a étant disposé perpendiculairement, lorsque vu de dessus, à l'axe longitudinal du véhicule, de façon à permettre au bloc élastique 19 et donc à la partie avant de la lame 1, de se déplacer dans la direction longitudinale au véhicule comme symbolisé par la double flèche F4 aux figures 5 et 6. Le bloc en caoutchouc 19 est également fixé à sa partie supérieure à la rondelle supérieure 22 par un adhésif tandis que la couronne en caoutchouc 24 est fixée, par un adhésif, à la rondelle inférieure 23.

Ainsi, chaque boulon 18 bloque simultanément, à la caisse 8 du véhicule, la traverse de direction 9 et chaque liaison élastique avant 13 de la lame transversale 1. En outre, chaque coupelle 20, qui comporte un rebord périphérique annulaire supérieur en appui sur la face supérieure de la paroi 21 du bossage correspondant B, est centrée par sa forme tronconique dans l'ouverture correspondante 21a pour éviter tout risque de jeu et de glissement dans le plan horizontal.

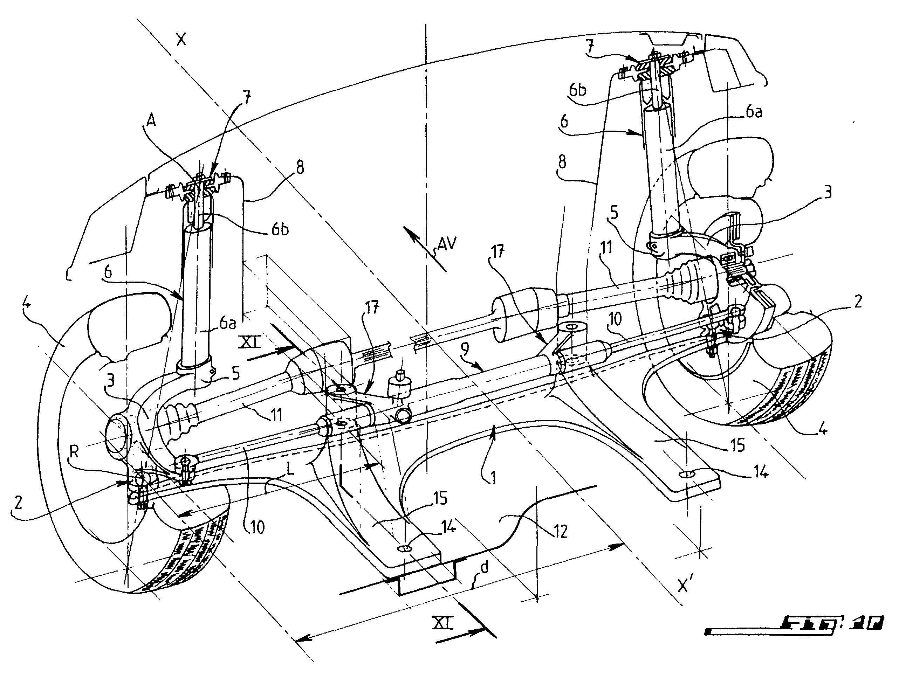

La figure 7 représente la liaison élastique entre la tige d'amortisseur 6b de l'amortisseur 6 et la caisse 8 du véhicule.

Cette liaison élastique comprend un bloc en une matière à base de caoutchouc 26 fixé à une paroi horizontale de la caisse 8 par l'intermédiaire d'un manchon 27 entourant concentriquement le bloc en caoutchouc 26 en étant solidarisé à ce dernier, par exemple par un adhésif, et comportant à sa partie inférieure un rebord annulaire 28 fixé à la paroi horizontale de la caisse 8 par des vis de fixation 29. Le bloc 26 est en outre fixé de façon comprimée axialement entre la paroi supérieure de fermeture 6c de l'amortisseur 6 et une rondelle 30 en appui serré sur le bloc 26 par l'intermédiaire d'un écrou 31 vissé sur une tige partiellement filetée 32 solidaire de la tige d'amortisseur 6b coaxialement à celle-ci et traversant le bloc 26. Une entretoise 33 est interposée entre la rondelle 30 et la paroi 6c concentriquement à la tige filetée 32 et a une longueur déterminant le taux de compression du bloc 26. La liaison élastique ainsi définie permet un maintien latéral et axial de la partie supérieure de l'amortisseur 6.

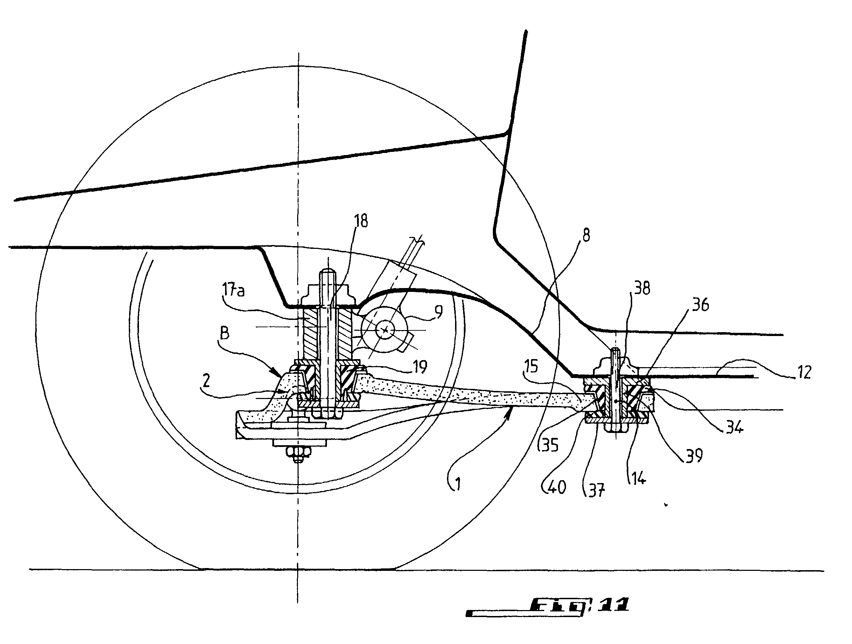

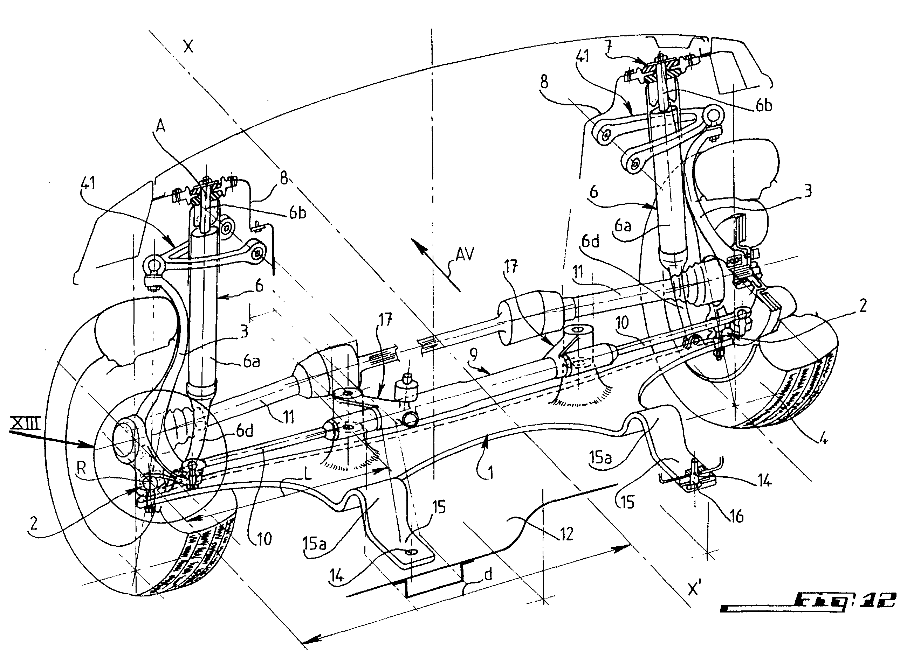

Les figures 8 et 9 représentent de façon plus détaillée la liaison par rotule entre l'extrémité de chaque bras transversal de la lame 1 et le pivot 3 de support de roue. Ainsi, la rotule 2 a sa sphère 2a logée de façon articulée dans la partie d'extrémité inférieure 3a du pivot 3 de façon connue en soi et est fixée à l'extrémité du bras de la lame 1 par une partie tronconique 2b prolongeant la sphère 2a et logée dans une ouverture tronconique de forme conjuguée 33a d'une entretoise 33 solidaire de l'extrémité de la lame 1. La partie tronconique 2b est prolongée par une tige filetée 2c traversant le bras de la lame 1 en faisant saillie sous celui-ci et sur laquelle est vissé un écrou 34 bloquant la sphère 2 à la lame 1.

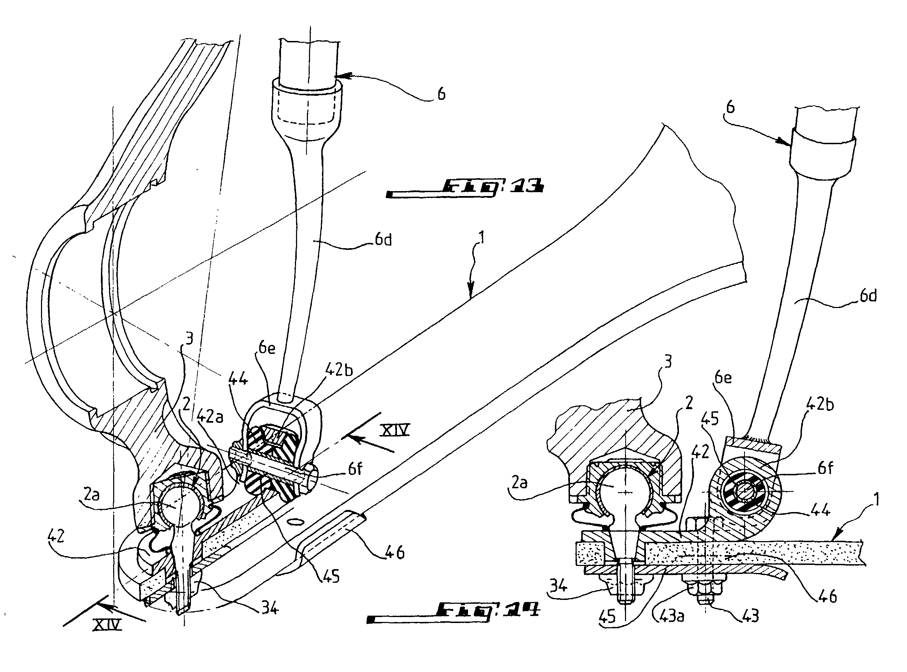

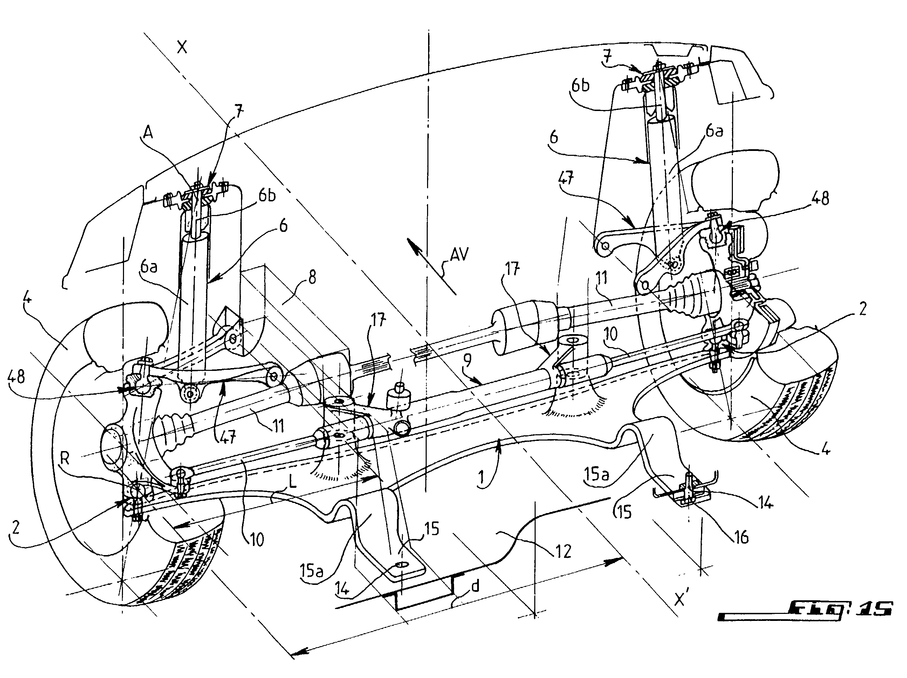

Selon la variante de réalisation du train avant représenté aux figures 10 et 11, où les éléments communs à ceux des figures 1 à 9 portent les mêmes références, la lame transversale 1 a ses deux pattes de fixation arrière 15 rectilignes et rigides et dont les extrémités sont reliées à la caisse 8 du véhicule par deux liaisons élastiques formant les deux points de fixation arrière 14 de la lame 1, chaque liaison élastique arrière ayant des caractéristiques de raideur transversale et de souplesse longitudinale sensiblement identiques à celles des liaisons élastiques avant de la lame transversale 1.

Comme représenté en figure 11, chaque liaison élastique arrière comprend un bloc en une matière à base de caoutchouc 34 sensiblement identique au bloc du caoutchouc 19 de la liaison élastique avant et fixé d'une part à une coupelle 35 sensiblement identique à la coupelle 20 et d'autre part entre deux rondelles respectivement supérieure 36 et inférieure 37 correspondant aux rondelles inférieure 23 et supérieure 22 en étant comprimé axialement entre ces deux rondelles par un boulon de fixation 38 au soubassement 12 de la caisse 8, une entretoise 39 étant interposée entre les deux rondelles 36 et 37, tandis qu'une couronne en une matière à base de caoutchouc 40 est interposée entre la rondelle inférieure 37 et la face inférieure de l'extrémité de la patte de fixation arrière correspondante 15. Bien entendu, chaque bloc en caoutchouc 34 est fixé, par un adhésif, à la coupelle 35 et la couronne de caoutchouc 40 est fixée, également par un adhésif, sur la rondelle inférieure 37.

Ainsi, tout comme les deux plis ondulés 15a des pattes arrière 15 de la lame transversale 1 de la première variante de réalisation représentée notamment en figure 1, les liaisons élastiques arrière 14 des pattes arrière 15 à la caisse 8 du véhicule faisant l'objet de la variante de réalisation des figures 10 et 11, permettent de légers déplacements de la lame 1 dans le sens longitudinal au véhicule et, ainsi, un bon filtrage longitudinal, par rapport à la caisse, des chocs longitudinaux reçus par chaque roue avant en fonctionnement dynamique.

Les figures 12 à 14 où les éléments identiques à ceux des trains avant précédemmment décrits portent les mêmes références, représentent l'application de la lame transversale 1 de l'invention à un train du type comprenant deux triangles supérieurs 41, dont le sommet de chacun est relié articulé à l'extrémité supérieure du pivot 3 de support de roue avant et les deux extrémités des deux bras du triangle sont reliées de façon articulée à la caisse 8 du véhicule.

Selon ce train, chaque amortisseur 6 comporte, solidaire de sa partie inférieure et en prolongement de celui-ci, une extension en forme de tige rigide légèrement courbée 6d dont l'extrémité inférieure est reliée, par une articulation élastique, au voisinage de l'extrémité correspondante de la lame transversale 1. Plus précisément, l'extrémité de l'extension 6d comporte une chape 6e entre les branches de laquelle est fixé un axe d'articulation 6f transversal au bras de la lame 1 et solidarisant la chape 6e à deux flasques parallèles 42a d'une plaque 42 fixée sur le bras de la lame 1 longitudinalement à celui-ci par deux boulons de fixation 43, dont un seul est représenté, et espacés l'un de l'autre longitudinalement. Un bloc en une matière à base de caoutchouc 44 de chaque liaison élastique de l'amortisseur 6 à la lame 1 est fixé sur l'axe 6f, par l'intermédiaire d'une douille 45 montée concentriquement sur l'axe 6f, et est logé sur son pourtour périphérique externe dans une partie cylindrique 42b située entre les deux flasques 42a solidairement de ceux-ci, le bloc 44 étant monté comprimé entre l'axe 6f et la partie cylindrique 42b. Bien entendu, le bloc 44 est fixé dans la partie cylindrique 42b et à la douille 45 par un adhésif. La figure 14 montre que la plaque 42 constitue en fait un prolongement de la partie supérieure de l'entretoise 33 et que l'écrou 34 de fixation de la rotule 2 à l'extrémité correspondante de la lame 1 et l'écrou 43a du boulon 43 sont serrés sur une plaque inférieure 45 en appui sous l'extrémité du bras de la lame 1, la plaque 45 comportant deux ailettes 46 relevées sensiblement à angle droit par rapport à la plaque 45 et permettant de centrer la plaque 45 relativement à l'extrémité de bras de la lame 1, le long de celle-ci.

La figure 15 représente l'application de la lame transversale 1 à un train avant du type comprenant deux triangles supérieurs bas 47, dont le sommet de chacun est relié en partie supérieure du pivot 3 de support de roue par l'intermédiaire d'une articulation à rotule 48 et les deux extrémités respectivement des deux bras de chaque triangle sont reliées de façon articulée à la caisse 8 du véhicule, étant bien entendu que les pattes de fixation arrière 15 de la lame 1, au lieu d'être conçues comme représenté notamment aux figures 1 et 12 avec leurs plis ondulés, peuvent comporter les articulations élastiques arrière décrites en référence notamment à la figure 11.

La lame transversale conforme à l'invention, en plus de réduire considérablement le nombre de pièces par rapport à un train avant classique, ce qui se traduit par une diminution de son poids ainsi qu'une réduction d'une consommation de carburant, permet de filtrer efficacement, par ses liaisons élastiques avant et arrière, les chocs longitudinaux susceptibles d'être reçus par les roues avant en dynamique.

## Revendications

1. Train avant pour véhicule automobile, comprenant une lame de ressort (1) s'étendant dans le sens transversal au véhicule et dont chaque extrémité est reliée, par l'intermédiaire d'une articulation à rotule (2), à un pivot (3) de support de roue avant, la lame transversale (1) étant fixée à la caisse (8) du véhicule d'une part en avant de celle-ci par deux points de fixation (13) et d'autre part en arrière de celle-ci par deux autres points de fixation (14), **caractérisé en ce que** les deux points de fixation avant (13) de la lame transversale (1) sont constitués par des liaisons élastiques ayant une raideur très élevée dans le sens transversal au véhicule et une certaine souplesse dans le sens longitudinal au véhicule autorisant un déplacement longitudinal de la partie avant de la lame transversale (1).

2. Train avant selon la revendication 1, **caractérisé en ce que** chaque liaison élastique avant (13) de la lame transversale (1) est située approximativement à la moitié de la distance transversale (d) séparant le centre (R) de la rotule (2) du pivot (3) du support de roue du plan vertical contenant l'axe longitudinal (X-X') du véhicule.

3. Train avant selon la revendication 1 ou 2, **caractérisé en ce que** la lame transversale (1) comprend, en arrière de celle-ci, deux pattes de fixation (15) s'étendant longitudinalement au véhicule au droit des deux points de fixation (13) et dont les extrémités sont fixées rigidement à la caisse (8) du véhicule pour constituer les deux points de fixation arrière (14), chaque patte de fixation (15) comprenant une partie élastiquement déformable (15a) permettant à la partie avant de la lame transversale (1) de se déplacer longitudinalement dans un plan horizontal.

4. Train avant selon la revendication 3, **caractérisé en ce que** la partie élastiquement déformable (15a) de chaque patte de fixation (15) est constituée par un pli ondulé transversal permettant le déplacement longitudinal de la patte de fixation (15).

5. Train avant selon la revendication 1 ou 2, **caractérisé en ce que** la lame transversale (1) comprend, en arrière de celle-ci, deux pattes de fixation rigides (15) s'étendant longitudinalement au véhicule au droit des deux points de fixation avant (13) et dont les extrémités sont fixées à la caisse (8) du véhicule par deux liaisons élastiques formant les deux points de fixation arrière (14), ayant des caractéristiques de raideur transversale et de souplesse longitudinale sensiblement identiques à celles des liaisons élastiques avant (13) de la lame transversale (1).

6. Train avant selon l'une des revendications précédentes, **caractérisé en ce que** la traverse de direction (9), contenant la crémaillère de direction, comprend deux parties formant bras de fixation (17) à la caisse (8) du véhicule, s'étendant en avant de l'axe de la crémaillère de direction et dont les deux extrémités (17a) de fixation à la caisse (8) forment des entretoises de fixation (17a) entre la caisse (8) et respectivement les deux liaisons élastiques avant (13) de la lame transversale (1), chaque liaison élastique avant (13) et son entretoise associée (17a) étant fixées ensemble à la caisse (8) par un boulon (18) ou analogue les traversant.

7. Train avant selon la revendication 6, **caractérisé en ce que** chaque liaison élastique (13) comprend un bloc en une matière à base de caoutchouc (19) fixé entre l'extrémité correspondante formant entretoise (17a) d'une partie formant bras (17) précitée par l'intermédiaire d'une rondelle supérieure (22) et une paroi plane supérieure (21) d'un bossage intérieurement creux (B) sur la lame transversale (1) par l'intermédiaire d'une coupelle (20) logée dans une ouverture de forme conjuguée (21a) réalisée à travers la paroi plane supérieure (21) et **en ce que** le bloc en caoutchouc (19) est enserré entre la rondelle supérieure (22) et la coupelle (20) par une rondelle inférieure (23) en appui sous la face inférieure de la paroi plane (21) sous l'action de la force de serrage du boulon de fixation (18).

8. Train avant selon la revendication 7, **caractérisé en ce que** le bloc en caoutchouc (19) est adhérisé à la rondelle supérieure (22) et à la coupelle (20) et une couronne en une matière à base de caoutchouc (24) est interposée entre la rondelle inférieure (23) et la face inférieure de la paroi plane (21) du bossage (B).

9. Train avant selon la revendication 7 ou 8, **caractérisé en ce qu'**il comprend une entretoise (25) disposée entre les deux rondelles supérieure (22) et inférieure (23) concentriquement au boulon de fixation (18).

10. Train avant selon l'une des revendications précédentes, **caractérisé en ce que** chaque rotule (2) du pivot (3) de support de roue est fixée sur l'extrémité correspondante de la lame transversale (1) par l'intermédiaire d'une plaque de support (42) solidaire de cette extrémité.

11. Train avant selon la revendication 10, **caractérisé en ce que** chaque amortisseur ou jambe de force (6), dont la tige d'amortisseur (6b) est reliée à la caisse (8) du véhicule par une articulation élastique (7), a la partie inférieure de son cylindre reliée à la plaque de support (42) par l'intermédiaire d'une extension en forme de tige rigide (6d) dont l'extrémité inférieure est reliée à la plaque de support (42) par une articulation élastique, dont l'axe (6f) est perpendiculaire à l'extrémité correspondante de la lame transversale (1).

12. Train avant selon l'une des revendications précédentes, **caractérisé en ce que** la lame transversale (1) est en matériau composite.

13. Train avant selon l'une des revendications précédentes, **caractérisé en ce que** la lame transversale (1) s'étend sensiblement au droit et en dessous de l'axe des roues avant (4) et est contenue sensiblement dans un plan horizontal correspondant à la partie inférieure du soubassement du véhicule.

14. Train avant selon l'une des revendications précédentes, **caractérisé en ce qu'**il est du type pseudo-Mac Pherson.

15. Train avant selon l'une des revendications 1 à 13, **caractérisé en ce qu'**il comprend deux triangles supérieurs hauts (41) reliant de façon articulée les pivots (3) de support de roues à la caisse (8) du véhicule.

16. Train avant selon l'une des revendications 1 à 13, **caractérisé en ce qu'**il comprend deux triangles supérieurs bas (47) reliant de façon articulée les pivots (3) de support de roues à la caisse (8) du véhicule.

## Claims

1. Front wheel axle unit for a vehicle, comprising a transverse spring plate (1), each end of which is connected by means of a spherical plain bearing (2), to a support pivot (3) of the front wheel, the transverse plate (1) being attached to the bodywork (8) of the vehicle on the one hand, at the front of this plate, by two attachment points (13) and, secondly, at its rear, by two other attachment points (14), **characterized in that** the two front attachment points (13) of the transverse plate (1) comprise elastic linkages having a very high level of rigidity transversely in relation to the vehicle, and a certain flexibility in the longitudinal direction of the vehicle, providing for a longitudinal displacement of the front part of the transverse plate (1).

2. Front wheel axle unit in accordance with claim 1, **characterized in that** each front elastic linkage (13) of the transverse plate (1) is approximately located at the transverse middle-point (d) separating the centre (C), of the ball-and-socket joint (2) of the wheel support pivot (3), from the vertical plane containing the longitudinal axis (X-X') of the vehicle.

3. Front wheel axle unit in accordance with claim 1 or 2, **characterized in that** the transverse plate (1) comprises, on the rear side, two attachment straps (15) extending longitudinally in relation to the vehicle to the right of the two attachment points (13), with the ends of the attachment straps (15) concerned being rigidly attached to the vehicle bodywork (8) to give the two rear attachment points (14), each attachment strap (15) comprising an elastically deformable section (15a) enabling the front part of the transverse plate (1) to move longitudinally in a horizontal plane.

4. Front wheel axle unit in accordance with claim 3, **characterized in that** the elastically deformable section (15a) of each attachment strap (15) comprises a transverse, corrugation enabling longitudinal displacement of the attachment strap (15).

5. Front wheel axle unit in accordance with claim 1 or 2, **characterized in that** the transverse plate (1) comprises, at the rear side, two rigid attachment straps (15) extending longitudinally in relation to the vehicle, to the right of the two front attachment points (13), the ends of the said rigid attachment straps (15) being attached to the vehicle bodywork (8) by two elastic linkages forming the two rear connection points (14), these latter connection points (14) showing transverse rigidity and longitudinal flexibility that is substantially the same as that of the front elastic linkages (13) of the transverse plate (1).

6. Front wheel axle unit in accordance with any one of the preceding claims, **characterized in that** the steering crosspiece (9), including the steering member, comprises two parts forming brackets (17) of attachment to the vehicle bodywork (8), extending in front of the axis of steering and having two ends (17a) for attachment to the bodywork (8) forming struts (17a) of attachment between the bodywork (8) and the two front elastic linkages (13) of the transverse plate (1), each front elastic linkage (13) and its associated strut (17a) being together fixed to the bodywork (8) by a bolt (18), or suchlike, passing through them.

7. Front wheel axle unit in accordance with claim 6, **characterized in that** each elastic linkage (13) comprises a block (19), made of a material based on rubber, fixed between the corresponding extremity forming a strut (17a) of a part forming a forementioned bracket (17), via an upper washer (2), and an upper flat surface (21) of a hollow boss (B) on the transverse plate (1), via a muffle (20) housed in a combined opening (21a) running across the upper flat side (21), and **in that** the rubber block (19) is enclosed, by a lower washer (23) supported below the lower face of the flat side (21) under the action of the locking force of the attachment bolt (18), between the upper washer (22) and the muffle (20).

8. Front wheel axle unit in accordance with claim 7, **characterized in that** the rubber block (19) adheres to the upper washer (22) and to the muffle (20), and a collar (24), made of a material that is based on rubber, is interposed between the upper washer (23) and the lower face of the flat side (21) of the boss (B).

9. Front wheel axle unit in accordance with claim 7 or 8, **characterized in that** it comprises a strut (25) disposed, between the two upper (22) and lower (23) washers, such that it is concentric in relation to the attachment bolt (18).

10. Front wheel axle unit in accordance with any one of the preceding claims, **characterized in that** each ball-and-socket joint (2) of the wheel support pivot (3) is fixed, by means of a support plate (42) acting jointly with the transverse plate (1), on the corresponding end of the transverse plate (1).

11. Front wheel axle unit in accordance with any claim 10, **characterized in that** each shock absorber or strut (6), the absorber shank (6b) of which is connected to the bodywork (8) of the vehicle by an elastic linkage (7), has the lower section of its cylinder connected to the support plate (42) via an extension in the form of a rigid shank (6d), the lower end of which is connected to the support plate (42) by an elastic linkage the axis of which is perpendicular to the corresponding end of the transverse plate (1).

12. Front wheel axle unit in accordance with any one of the preceding claims, **characterized in that** the transverse plate (1) is made of composite material.

13. Front wheel axle unit in accordance with any one of the preceding claims, **characterized in that** the transverse plate (1) extends appreciably to the right and below the axes of the front wheels (4) and is appreciably contained within a horizontal plane corresponding to the lower section of the substructure of the vehicle.

14. Front wheel axle unit in accordance with any one of the preceding claims, **characterized in that** it is of the pseudo-MacPherson type.

15. Front wheel axle unit in accordance with any one of the preceding claims, **characterized in that** it comprises two high upper triangles (41) linking the wheel support pivots (3) to the vehicle bodywork (8).

16. Front wheel axle unit in accordance with any one of the preceding claims, **characterized in that** it comprises two low upper triangles (47) linking the wheel support pivots (3) to the vehicle bodywork (8).

## Patentansprüche

1. Vorderradaufhängung für ein Kraftfahrzeug, mit einer Blattfeder (1), die sich in Querrichtung zum Fahrzeug erstreckt und deren jedes Ende über ein Kugelgelenk (2) mit einem Zapfen (3) zum Tragen des Vorderrads verbunden ist, wobei die Querblattfeder (1) am Aufbau (8) des Fahrzeugs einerseits in deren vorderen Bereich über Befestigungspunkte (13) und andererseits in deren hinteren Bereich über weitere Befestigungspunkte (14) befestigt ist, **dadurch gekennzeichnet, dass** die beiden vorderen Befestigungspunkte (13) der Querblattfeder (1) aus elastischen Verbindungen mit einer sehr hohen Steifigkeit in Querrichtung zum Fahrzeug und mit einer gewissen Nachgiebigkeit in Längsrichtung des Fahrzeugs bestehen, wodurch eine Längsverstellung des vorderen Bereichs der Querblattfeder (1) gestattet wird.

2. Vorderradaufhängung nach Anspruch 1, **dadurch gekennzeichnet, dass** jede vordere elastische Verbindung (13) der Querblattfeder (1) sich annähernd auf halbem Querabstand (d) befindet, der den Mittelpunkt (R) der Gelenkkugel (2) des Radtragzapfens (3) von der senkrechten Ebene trennt, welche die Längsachse (X-X') des Fahrzeugs enthält.

3. Vorderradaufhängung nach Anspruch 1 oder 2, **dadurch gekennzeichnet, dass** die Querblattfeder (1) in ihrem hinteren Bereich zwei Befestigungslaschen (15) enthält, die sich in Längsrichtung des Fahrzeugs im Bereich der beiden Befestigungspunkte (13) erstrecken und deren Enden starr am Fahrzeugaufbau (8) befestigt sind, um die beiden hinteren Befestigungspunkte (14) zu bilden, wobei jede Befestigungslasche (15) einen elastisch verformbaren Abschnitt (15a) enthält, der es dem vorderen Bereich der Querblattfeder (1) gestattet, sich längs in einer horizontalen Ebene zu verstellen.

4. Vorderradaufhängung nach Anspruch 3, **dadurch gekennzeichnet, dass** der elastisch verformbare Abschnitt (15a) einer jeden Befestigungslasche (15) aus einer querverlaufenden wellenförmigen Biegung besteht, welche die Längsverstellung der Befestigungslasche (15) gestattet.

5. Vorderradaufhängung nach Anspruch 1 oder 2, **dadurch gekennzeichnet, dass** die Querblattfeder (1) in ihrem hinteren Bereich zwei starre Befestigungslaschen (15) enthält, die sich in Längsrichtung des Fahrzeugs im Bereich der beiden vorderen Befestigungspunkte (13) erstrecken und deren Enden am Fahrzeugaufbau (8) über zwei die beiden hinteren Befestigungspunkte (14) bildende elastische Verbindungen befestigt sind, deren Steifigkeitskennlinie in Querrichtung und Nachgiebigkeitskennlinie in Längsrichtung im wesentlichen identisch sind zu denen der vorderen elastischen Verbindungen (13) der Querblattfeder (1).

6. Vorderradaufhängung nach einem der vorangehenden Ansprüche, **dadurch gekennzeichnet, dass** die Lenktraverse (9), welche die Lenkzahnstange enthält, zwei Befestigungsarmteile (17) zur Befestigung am Fahrzeugaufbau (8) enthält, die sich vor der Achse der Lenkzahnstange erstrecken und deren beide Enden (17a) zur Befestigung am Aufbau (8) Befestigungsstreben (17a) zwischen dem Aufbau (8) und den beiden jeweiligen vorderen elastischen Verbindungen (13) der Querblattfeder (1) bilden, wobei jede vordere elastische Verbindung (13) und deren zugeordnete Strebe (17a) zusammen am Aufbau (8) über einen Bolzen (18) oder dergleichen befestigt sind, welcher diese durchsetzt.

7. Vorderradaufhängung nach Anspruch 6, **dadurch gekennzeichnet, dass** jede elastische Verbindung (13) einen Block aus einem Material auf Gummibasis (19) enthält, der zwischen dem entsprechenden die Strebe (17a) bildenden Ende eines vorgenannten Armteils (17) über eine obere Ringscheibe (22) und einer ebenen oberen Wand (21) einer innen hohl ausgeführten Erhöhung (B) auf der Querblattfeder (1) mittels eines Tellers (20) befestigt ist, der in einer Öffnung entsprechender Form (21 a) untergebracht ist, die durch die ebene obere Wand (21) hindurch ausgeführt ist, und dass der Gummiblock (19) zwischen der oberen Ringscheibe (22) und dem Teller (20) durch eine untere Ringscheibe (23) eingespannt ist, die sich an der Unterseite der ebenen Wand (21) unter der Wirkung der Spannkraft des Befestigungsbolzens (18) abstützt.

8. Vorderradaufhängung nach Anspruch 7, **dadurch gekennzeichnet, dass** der Gummiblock (19) an der oberen Ringscheibe (22) und an dem Teller (20) anhaftet und dass ein Ring aus einem Material auf Gummibasis (24) zwischen der unteren Ringscheibe (23) und der Unterseite der ebenen Wand (21) der Erhöhung (B) zwischengelagert ist.

9. Vorderradaufhängung nach Anspruch 7 oder 8, **dadurch gekennzeichnet, dass** sie eine Strebe (25) enthält, die zwischen den beiden Ringscheiben, nämlich der oberen (22) und der unteren (23), konzentrisch zum Befestigungsbolzen (18) angeordnet ist.

10. Vorderradaufhängung nach einem der vorangehenden Ansprüche, **dadurch gekennzeichnet, dass** jede Gelenkkugel (2) des Radtragzapfens (3) am entsprechenden Ende der Querblattfeder (1) über eine fest mit diesem Ende verbundene Tragplatte (42) befestigt ist.

11. Vorderradaufhängung nach Anspruch 10, **dadurch gekennzeichnet, dass** jeder Stoßdämpfer bzw. jedes Federbein (6), dessen Stoßdämpferstange über eine Federanlenkung (7) mit dem Fahrzeugaufbau (8) verbunden ist, am unteren Abschnitt seines Zylinders mit der Tragplatte (42) über eine Erstreckung in Form einer starren Stange (6d) verbunden ist, deren unteres Ende über eine Federanlenkung mit der Tragplatte (42) verbunden ist, deren Achse (6f) senkrecht zum entsprechenden Ende der Querblattfeder (1) verläuft.

12. Vorderradaufhängung nach einem der vorangehenden Ansprüche, **dadurch gekennzeichnet, dass** die Querblattfeder (1) aus einem Verbundmaterial besteht.

13. Vorderradaufhängung nach einem der vorangehenden Ansprüche, **dadurch gekennzeichnet, dass** die Querblattfeder (1) sich im wesentlichen im Bereich und unter der Achse der Vorderräder (4) erstreckt und im wesentlichen in einer horizontalen Ebene enthalten ist, die dem unteren Bereich des Fahrzeugsunterbaus entspricht.

14. Vorderradaufhängung nach einem der vorangehenden Ansprüche, **dadurch gekennzeichnet, dass** sie von der Art Pseudo-McPherson ist.

15. Vorderradaufhängung nach einem der Ansprüche 1 bis 13, **dadurch gekennzeichnet, dass** sie zwei obere Oberdreieckswinkel (41) enthält, welche die Radtragzapfen (3) gelenkig mit dem Fahrzeugaufbau (8) verbinden.

16. Vorderradaufhängung nach einem der Ansprüche 1 bis 13, **dadurch gekennzeichnet, dass** sie zwei untere Oberdreieckswinkel (47) enthält, welche die Radtragzapfen (3) gelenkig mit dem Fahrzeugaufbau (8) verbinden.
